# EUROPEAN PATENT SPECIFICATION

(11) **EP 4 060 785 B1**
(45) Date of publication and mention of the grant of the patent: **02.07.2025**
(21) Application number: 21163473.8
(22) Date of filing: 18.03.2021
(51) Int. Cl.: H01M 10/42, H01M 50/574, B60L 3/00, B60L 3/04, B60L 58/21, H01M 10/48

(54) **BATTERY SYSTEM AND VEHICLE INCLUDING THE BATTERY SYSTEM**
BATTERIESYSTEM UND FAHRZEUG MIT DEM BATTERIESYSTEM
SYSTÈME DE BATTERIE ET VÉHICULE COMPRENANT LE SYSTÈME DE BATTERIE

(43) Date of publication of application: 21.09.2022
(73) Proprietor: Samsung SDI Co., Ltd., Yongin-si, Gyeonggi-do 17084 (KR)
(72) Inventor: Reinprecht, Wolfgang, 8144 Attendorf (AT); Hofer, Maximilian, 8230 Hartberg (AT)
(74) Representative: Gulde & Partner

(56) References cited:
- EP-A1- 3 079 185
- EP-A1- 3 882 944
- WO-A1-2015/082201
- WO-A1-2019/034474
- DE-A1- 102008 044 774
- DE-A1- 102012 214 835
- DE-A1- 102012 214 879
- DE-A1- 102020 116 417
- US-A1- 2018 147 941
- AUDI VORSPRUNG DURCH TECHNIK: "Leitfaden Für Rettungskräfte", 4 March 2015 (2015-03-04), XP055405245, Retrieved from the Internet <URL:https://www.audi.de/dam/nemo/models/misc/special-purpose-vehicles/PDF/IG_DE_RL_Audi_Web.pdf> [retrieved on 20170911]

## Description

### Field of the Disclosure

The present invention relates to a battery system comprising a high voltage battery and a battery disconnecting element for disconnecting the high voltage battery from at least one of the battery system terminals in case of a malfunction or a crash. Further, the present invention relates to a vehicle comprising the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging. For disconnection of the battery in case of a malfunction of the battery or in case of a crash of the electric vehicle carrying the battery pyrotechnic elements are often used.

In general, BDUs are powered by the low voltage power supply of an electric vehicle, in particular the 12 V car battery. To ensure that the power needed for disconnection, in particular for triggering a pyrotechnic element, is available even in case of an abrupt disconnection from the low voltage power supply, a capacitor is used to store the needed energy.

DE 10 2012 215 074 A1 describes a BDU comprising such a capacitor. The BDU comprises a pyrotechnic switch and a separate thermal trigger element which is arranged in an electric circuit with the pyrotechnic switch. When a temperature of the battery exceeds a certain threshold the thermal trigger element triggers thereby closing an electric circuit that connects the pyrotechnic switch to the capacitor as a power supply. This way the pyrotechnic switch is triggered, and the battery is disconnected from the battery system terminals and therefore from the electrical system of the vehicle.

BDUs relying on a capacitor for energy storage are complex as multiple components are needed to ensure the wanted release of the pyro element. Further, if the low voltage power supply is disconnected from the BDU not abruptly, but for longer periods of time, e.g. because of damage to the connecting cables, the capacitor cannot be charged and the pyro element of damage to the connecting cables, the capacitor cannot be charged and the pyro element can thus not operate.

EP 3 079 185 A1, WO 2015/082201 A1, US 2018/147941 A1, DE 10 2012 214835 A1, DE 10 2012 214879 A1, WO 2019/034474 A1 describe battery disconnecting elements. In particular, US 2018/147941 A1 discloses a battery system according the preamble of claim 1.

It is thus an object of the present invention to overcome or reduce at least some of the drawbacks of the prior art and to provide a less complex battery system which is able to be disconnected securely and reliably from the electrical system of the vehicle in case of a malfunction or crash.

### Summary of Invention

Embodiments of the present disclosure seek to solve at least one of the problems existing in the prior art to at least some extent.

According to the invention the battery system for an electric vehicle comprises a high voltage battery with a plurality of battery cells interconnected with one another for providing a high voltage output at battery system terminals of the battery system, and a battery disconnecting element for disconnecting the high voltage battery from at least one of the battery system terminals in case of a malfunction or crash, wherein the battery disconnecting element is powered by the high voltage battery.

The high voltage battery may serve as a traction battery of an electric vehicle, i.e. it may power the propulsion of a battery electric vehicle. The high voltage battery is adapted to be connected to the electrical system of the vehicle via the battery system terminals and may provide voltages in the HV range starting at 60 V, in particular between 60 V and 1,500 V. For example, the high voltage battery may provide a voltage of 400 V and/or a current of 20 mA. The high voltage battery may thus form part of a HV supply circuit of an electric vehicle which serves to provide power for the electric propulsion of the electric vehicle. An electric vehicle may have further supply circuits, in particular an LV supply circuit powered by a low voltage power supply of the electric vehicle, e.g. a 12 V car battery, as mentioned above. The LV supply circuit usually serves to power functions other than the propulsion of the electric vehicle, e.g. comfort functions.

The battery disconnecting element according to the invention serves to disconnect the high voltage battery from at least one of the battery system terminals in case of a malfunction of the battery or in case of a crash of the electric vehicle comprising the high voltage battery as a traction battery. An overcurrent occurring in the battery may be interpreted as a malfunction of the battery. An overcurrent sensor may be provided to detect such an overcurrent. A crash of the vehicle may be detected by a crash sensor of the vehicle. The battery disconnecting element is electrically connected with the high voltage battery and with one or both of the battery system terminals. In particular, the battery disconnecting element is electrically connected between the high voltage battery and the battery system terminals and may be considered to be part of a battery disconnect unit, BDU, as mentioned above. By disconnecting the high voltage battery from at least one of the battery system terminals, the high voltage battery is disconnected from the electrical system of the vehicle, in particular from the above mentioned HV supply circuit.

According to the invention the battery disconnecting element is powered by the high voltage battery, i.e. the traction battery of the electric vehicle. The battery disconnecting element being powered by the high voltage battery means that the energy needed to trigger the battery disconnecting element is provided by the high voltage battery. For example, the battery disconnecting element may comprise a pyro element, wherein the energy needed to trigger the pyro fuse is taken from the high voltage battery. When the battery disconnecting element is powered/triggered the high voltage battery is separated from at least one of the battery system terminals and therefore from the electrical system of the vehicle.

Thus, with the invention the high voltage traction battery of the electric vehicle is used to power/trigger the battery disconnecting element, in particular a pyro element. In other words, the energy needed to trigger the battery disconnecting element, in particular the pyro element, is taken from the high voltage battery which is intended to be electrically disconnected from the drive system in case of a malfunction or a crash. Thus, in a sense the high voltage traction battery disconnects itself from the electrical system, i.e. the HV supply circuit, of the vehicle in case of a malfunction or crash. As long as the high voltage battery supply is available, enough power can be provided to trigger the battery disconnecting element. Thus, the energy for disconnection of the battery system from the electrical system of the vehicle is available at all times and need not to be stored within capacitors.

With respect to the prior art BDU of DE 10 2012 215 074 A1 a constructively simpler BDU is provided as no capacitors are needed. In contrast to the prior art, the invention does not use the LV power supply of the electric vehicle to power/trigger the battery disconnecting element, but rather the HV power supply, i.e. the traction battery which is supposed to be disconnected via the battery disconnecting element. The battery system according to the invention is therefore less complex while still being able to be disconnected securely and reliably from the electrical system of the vehicle in case of a malfunction or crash. Further, due to the battery system being less complex there is a lower risk of malfunction of the BDU.

According to an embodiment the battery disconnecting element comprises a pyro element, in particular a pyro fuse. Triggering of the pyro element leads to the disconnection of the high voltage battery from at least one of the battery terminals and thus from the electrical system of the vehicle. A pyro element allows for a particularly reliable disconnection.

According to the invention the battery system further comprises a transformer adapted to transform at least one of: the high voltage of the high voltage battery to a voltage suitable for powering the battery disconnecting element, and a current of the high voltage battery to a current suitable for powering the battery disconnecting element. Thus, with the transformer the voltage and/or current output of the high voltage battery may be adapted to levels suitable for powering/triggering the battery disconnecting element. Thus, if the battery disconnecting element comprises a pyro element, the transformer may be adapted to transform the high voltage and/or the current of the high voltage battery to a voltage and/or current suitable for triggering the pyro element. In particular, the transformer may be adapted to transform the 400 V / 20 mA of the high voltage battery to 4 V / 2 A of the battery disconnecting element. The transformer may also be part of the BDU of the battery system.

According to an embodiment the battery disconnecting element comprises a switch and a control unit adapted to actuate the switch, wherein actuating the switch powers the battery disconnecting element. In particular, actuating the switch may connect the battery disconnecting element to the high voltage battery thereby powering/triggering the battery disconnecting element. Actuating the switch can mean closing the switch and thereby a driver circuit comprising the high voltage battery and the battery disconnecting element so that via the switch the disconnecting element may be triggered. The switch is actuated by the control unit. The control unit may be adapted to actuate the switch when a malfunction of the battery occurs and/or when a crash occurs. Respective sensors may be provided to detect such a malfunction or crash, wherein dependent on the sensor output the control unit may actuate the switch. The control unit may be powered e.g. by a low voltage supply, e.g. a 12 V car battery, via the above mentioned low voltage supply circuit. Thus, the control unit may be part of the low voltage supply circuit. The switch and/or the control unit for the switch may be part of the BDU of the battery system.

According to a further embodiment the battery system comprises a backup power supply for the control unit in case that a main power supply of the control unit fails. As mentioned, the main power supply of the control unit may be the low voltage supply of the electric vehicle, e.g. the 12 V car battery. If this main power supply fails, e.g. because the 12 V car battery is disconnected from the control unit and/or the BDU, the backup power supply comes in. Thus, it is ensured that the battery disconnecting element is triggered.

According to a further an embodiment the control unit is adapted to actuate the switch for a predetermined time span, in particular for a few milliseconds. In other words, the control unit may be adapted to close the switch thereby connecting the battery disconnecting element to the high voltage battery and to open the switch again after a predetermined time span. The predetermined time span may be chosen so that the battery disconnecting element is powered sufficiently long to be triggered. Actuating the switch only for a limited time makes the system safer.

According to the invention the transformer comprises a first coil and a second coil, the first coil and the switch being connected in series to each other and both of them being connected in parallel to the high voltage battery between the two battery system terminals, the second coil being connected to the battery disconnecting element to trigger the battery disconnecting element. This arrangement allows for a particularly simple BDU design.

According to the invention the battery system may comprise a diode connected in parallel to the first coil of the transformer. The diode is a flyback diode. The diode may protect the switch. In particular, the diode may be used to eliminate flyback, i.e. a sudden voltage spike seen across the transformer as an inductive load when its supply current is suddenly reduced or interrupted.

According to another aspect of the present disclosure, an electric vehicle including a battery system as defined above is provided. The electric vehicle may be a fully electric vehicle or a hybrid as explained above. The high voltage battery of the battery system serves as the traction battery of the electric vehicle. The electric vehicle may comprise a low voltage supply circuit powered by a low voltage power supply of the electric vehicle and a high voltage supply circuit powered by the high voltage power supply of the battery system as has also been explained above. Further, the low voltage power supply may be adapted to power the control unit that is adapted to actuate the switch so as to power the battery disconnecting element as has been explained above as well.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:

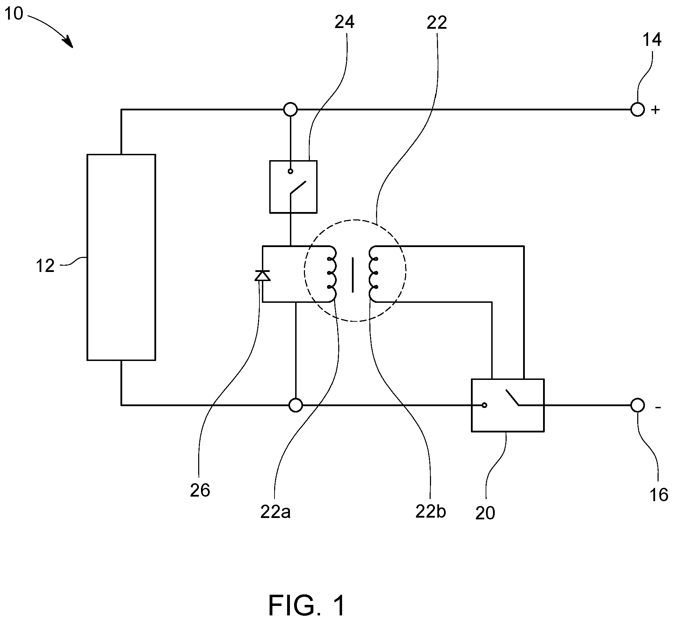

Fig. 1 is a block diagram illustrating the battery system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. For better readability, not necessarily all elements in the figures are marked with reference signs. Especially in the case of redundant elements, only some of the elements may have reference symbols. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

In Figure 1 a battery system 10 for an electric vehicle is shown. The battery system 10 comprises a high voltage battery 12 which in turn comprises a plurality of battery cells. The battery cells may be arranged in a row forming one or more battery modules. Each battery cell may comprise two electrode terminals which are connected with electrodes of the respective battery cell. The battery cells may be interconnected with one another via busbars forming electrical connecting means between the electrode terminals of two neighboring battery cells. In particular, the battery cells may be interconnected with one another in series via the busbars within the modules. The high voltage battery 12 is in connection with two battery system terminals 14, 16 through which the high voltage battery 12 may provide its high voltage output to an electric vehicle.

The battery system 10 further comprises a pyro fuse 20 as a battery disconnecting element for disconnecting the high voltage battery 12 from at least one of the battery system terminals 14, 16 in case of a malfunction or crash. In particular, the pyro fuse 20 may sever the connection between the battery system terminal 16 and the high voltage battery 12. The pyro fuse 20 is powered by the high voltage battery 12 as will be explained in the following.

The battery system 10 further comprises a transformer 22 and a switch 24. The transformer 22 comprises a first coil 22a and a second coil 22b, wherein the first coil 22a and the switch 24 are connected in series to each other and wherein the first coil 22a and the switch 24 are connected in parallel to the high voltage battery 12 between the two battery system terminals 14, 16 as can be seen in Figure 1. The second coil 22b is connected to the pyro fuse 20.

The battery 12, the transformer 22 and the switch 24 form a driver circuit for supplying the pyro fuse 20 with power so as to trigger the pyro fuse 20. The pyro fuse 20, the transformer 22 and the switch 24 may be part of a battery disconnecting unit, BDU.

In case of a malfunction of the battery system or in case of a crash of the electric vehicle comprising the high voltage battery as a traction battery, a control unit (not shown) actuates (i.e. closes) the switch 24 and therefore triggers the pyro fuse 20. The switch 24 may be actuated by the control unit when the control unit receives either a crash signal provided by the system of the vehicle or by a signal output of an overcurrent monitoring system of the battery. By actuating the switch 24 the driver circuit is closed, i.e. the pyro fuse 20 is connected with the high voltage battery 12 as a power supply so that the pyro fuse 20 is triggered. The transformer has a galvanic isolation and provides the correct power to sufficiently trigger the pyro fuse 20, i.e. the transformer transforms the low current, high voltage pulse provided by the high voltage battery 12 via its coils 22a, 22b into a low voltage, high current pulse that is applied to the pyro fuse 20 to fire the fuse.

Furthermore, the driver circuit comprises a flyback diode 26 connected in parallel to the first coil 22a of the transformer 22. The diode 26 protects the switch 24 from flyback, i.e. a sudden voltage spike seen across the transformer 22 when its supply current is suddenly reduced or interrupted. The flyback diode 26 may also be part of the BDU.

Thus, with the inventive battery system the high voltage battery, i.e. the traction battery of the electric vehicle, itself is used to power the battery disconnecting element, i.e. to trigger the pyro fuse. Therefore, in contrast to the prior art which powers the battery disconnecting element via a low voltage supply of the electric vehicle, no capacitor is needed to provide power to the battery disconnecting element. The battery system according to the invention is therefore less complex and has a lower risk of malfunctioning parts.

### Reference signs

- 10: battery system
- 12: high voltage battery
- 14, 16: battery system terminals
- 20: pyro fuse
- 22: transformer
- 22a: first coil of transformer
- 22b: second coil of transformer
- 24: switch
- 26: flyback diode

## Claims

1. A battery system (10) for an electric vehicle, comprising a high voltage battery (12) with a plurality of battery cells interconnected with one another for providing a high voltage output at battery system terminals (14, 16) of the battery system (10), further comprising a battery disconnecting element (20) for disconnecting the high voltage battery (12) from at least one of the battery system terminals (14, 16) in case of a malfunction or crash, wherein the battery disconnecting element (20) is powered by the high voltage battery (12) in that the energy needed to trigger the battery disconnecting element (20) is provided by the high voltage battery (12), the battery system (10) further comprising a transformer (22) adapted to transform at least one of: the high voltage of the high voltage battery (12) to a voltage suitable for powering the battery disconnecting element (20), and a current of the high voltage battery (12) to a current suitable for powering the battery disconnecting element (20) **characterised in that** the transformer (22) comprises a first coil (22a) and a second coil (22b), the first coil (22a) and the switch (24) being connected in series to each other and connected in parallel to the high voltage battery (12) between the two battery system terminals (14, 16), the second coil (22b) being connected to the battery disconnecting element (20) to trigger the battery disconnecting element (20), the battery system (10) further comprising a flyback diode (26) connected in parallel to the first coil (22a) of the transformer (22).

2. The battery system (10) of claim 1, wherein the battery disconnecting element (20) comprises a pyro element.

3. The battery system (10) of claim 1, wherein the battery disconnecting element (20) comprises a switch (24) and a control unit adapted to actuate the switch (24), wherein actuating the switch (24) powers the battery disconnecting element (20).

4. The battery system (10) of claim 3, wherein the control unit is adapted to actuate the switch (24) for a predetermined time span.

5. The battery system (10) of claim 3 or 4, further comprising a backup power supply for the control unit in case that a main power supply of the control unit fails.

6. An electric vehicle comprising a battery system (10) of any one of the preceding claims.

7. The electric vehicle of claim 6, comprising a low voltage supply circuit powered by a low voltage power supply and a high voltage supply circuit powered by the high voltage battery.

8. The electric vehicle of claim 6, wherein the low voltage power supply is adapted to power the control unit that is adapted to actuate the switch (24) so as to power the battery disconnecting element (20).

## Patentansprüche

1. Batteriesystem (10) für ein Elektrofahrzeug, umfassend eine Hochspannungsbatterie (12) mit einer Mehrzahl von miteinander verbundenen Batteriezellen zur Bereitstellung einer Hochspannungsausgabe an Batteriesystemanschlüssen (14, 16) des Batteriesystems (10), ferner umfassend ein Batterietrennelement (20) zum Trennen der Hochspannungsbatterie (12) von zumindest einem der Batteriesystemanschlüsse (14, 16) im Falle einer Fehlfunktion oder eines Unfalls, wobei das Batterietrennelement (20) durch die Hochspannungsbatterie (12) dahingehend versorgt wird, dass die zum Auslösen des Batterietrennelements (20) benötigte Energie durch die Hochspannungsbatterie (12) bereitgestellt wird, wobei das Batteriesystem (10) ferner einen Transformator (22) umfasst, der dazu ausgelegt ist, zumindest eines der Folgenden zu transformieren: die Hochspannung der Hochspannungsbatterie (12) in eine Spannung, die zur Versorgung des Batterietrennelements (20) geeignet ist, und einen Strom der Hochspannungsbatterie (12) in einen Strom, der zur Versorgung des Batterietrennelements (20) geeignet ist,
**dadurch gekennzeichnet, dass** der Transformator (22) eine erste Spule (22a) und eine zweite Spule (22b) umfasst, wobei die erste Spule (22a) und der Schalter (24) miteinander in Reihe geschaltet sind und zwischen den beiden Batteriesystemanschlüssen (14, 16) parallel zu der Hochspannungsbatterie (12) geschaltet sind, wobei die zweite Spule (22b) mit dem Batterietrennelement (20) verbunden ist, um das Batterietrennelement (20) auszulösen, wobei das Batteriesystem (10) ferner eine Freilaufdiode (26) umfasst, die parallel zu der ersten Spule (22a) des Transformators (22) geschaltet ist.

2. Batteriesystem (10) nach Anspruch 1, wobei das Batterietrennelement (20) ein Pyroelement umfasst.

3. Batteriesystem (10) nach Anspruch 1, wobei das Batterietrennelement (20) einen Schalter (24) und eine zur Betätigung des Schalters (24) ausgelegte Steuereinheit umfasst, wobei durch Betätigung des Schalters (24) das Batterietrennelement (20) versorgt wird.

4. Batteriesystem (10) nach Anspruch 3, wobei die Steuereinheit dazu ausgelegt ist, den Schalter (24) über eine vorbestimmte Zeitspanne zu betätigen.

5. Batteriesystem (10) nach Anspruch 3 oder 4, ferner umfassend eine Notstromversorgung für die Steuereinheit für den Fall, dass eine Hauptstromversorgung der Steuereinheit ausfällt.

6. Elektrofahrzeug, umfassend ein Batteriesystem (10) nach einem der vorangehenden Ansprüche.

7. Elektrofahrzeug nach Anspruch 6, umfassend eine Niederspannungsversorgungsschaltung, die durch eine Niederspannungsstromversorgung versorgt wird, und eine Hochspannungsversorgungsschaltung, die durch die Hochspannungsbatterie versorgt wird.

8. Elektrofahrzeug nach Anspruch 6, wobei die Niederspannungsstromversorgung dazu ausgelegt ist, die Steuereinheit zu versorgen, die dazu ausgelegt ist, den Schalter (24) zu betätigen, um das Batterietrennelement (20) zu versorgen.

## Revendications

1. Système de batterie (10) pour un véhicule électrique, comportant une batterie haute tension (12) avec une pluralité de cellules de batterie interconnectées entre elles pour fournir une sortie haute tension au niveau de bornes (14, 16) du système de batterie (10), comportant en outre un élément de déconnexion de batterie (20) pour déconnecter la batterie haute tension (12) d'au moins l'une des bornes (14, 16) du système de batterie en cas de dysfonctionnement ou d'accident, dans lequel l'élément de déconnexion de batterie (20) est alimenté par la batterie haute tension (12) de sorte que l'énergie nécessaire pour déclencher l'élément de déconnexion de batterie (20) soit fournie par la batterie haute tension (12), le système de batterie (10) comportant en outre un transformateur (22) adapté pour transformer au moins l'un parmi : la haute tension de la batterie haute tension (12) en une tension appropriée pour alimenter l'élément de déconnexion de batterie (20), et un courant de la batterie haute tension (12) en un courant approprié pour alimenter l'élément de déconnexion de batterie (20), **caractérisé en ce que** le transformateur (22) comporte une première bobine (22a) et une deuxième bobine (22b), la première bobine (22a) et le commutateur (24) étant connectés en série l'un à l'autre et connectés en parallèle à la batterie haute tension (12) entre les deux bornes de système de batterie (14, 16), la deuxième bobine (22b) étant connectée à l'élément de déconnexion de batterie (20) pour déclencher l'élément de déconnexion de batterie (20), le système de batterie (10) comportant en outre une diode de roue libre (26) connectée en parallèle à la première bobine (22a) du transformateur (22).

2. Système de batterie (10) selon la revendication 1, dans lequel l'élément de déconnexion de batterie (20) comporte un élément pyro.

3. Système de batterie (10) selon la revendication 1, dans lequel l'élément de déconnexion de batterie (20) comporte un commutateur (24) et une unité de commande adaptée pour actionner le commutateur (24), dans lequel l'actionnement du commutateur (24) alimente l'élément de déconnexion de batterie (20).

4. Système de batterie (10) selon la revendication 3, dans lequel l'unité de commande est adaptée pour actionner le commutateur (24) pendant une durée prédéterminée.

5. Système de batterie (10) selon la revendication 3 ou 4, comportant en outre une alimentation de secours pour l'unité de commande en cas de défaillance d'une alimentation principale de l'unité de commande.

6. Véhicule électrique comportant un système de batterie (10) selon l'une quelconque des revendications précédentes.

7. Véhicule électrique selon la revendication 6, comportant un circuit d'alimentation basse tension alimenté par une alimentation basse tension et un circuit d'alimentation haute tension alimenté par la batterie haute tension.

8. Véhicule électrique selon la revendication **6,** dans lequel l'alimentation basse tension est adaptée pour alimenter l'unité de commande qui est adaptée pour actionner le commutateur (24) de façon à alimenter l'élément de déconnexion de batterie (20).
